# EUROPEAN PATENT APPLICATION

(11) **EP 1 375 405 A1**
(43) Date of publication of application: **02.01.2004**
(21) Application number: 02425424.5
(22) Date of filing: 27.06.2002
(51) Int. Cl.: B65H 31/30, B65G 47/90

(54) **Unit for handling a product comprising at least one ream of sheets**

(71) Applicant: Innopack S.r.l., 40012 Calderara di Reno (IT)
(72) Inventor: Cinotti, Andrea, 40141 Bologna (IT); Milani, Massimo, 40041 Pietracolora-Gaggio Montano (IT); Schiavina, Luca, 40131 Bologna (IT)
(74) Representative: Cerbaro, Elena, Dr.

(57) **Abstract**

A unit for handling a product (2) defined by at least one ream (2a) of sheets has two gripping members (5; 45, 46); and an actuating assembly (6; 52) for moving the gripping members (5; 45, 46) to and from a gripping position wherein the gripping members (5; 45, 46) engage the product (2) on opposite sides of the product (2) in a given direction (7; 40).

## Description

The present invention relates to a unit for handling a product comprising at least one ream of sheets.

More specifically, the present invention relates to a unit for handling reams of sheets in a ream palletizing system, to which the following description refers purely by way of example.

Reams of sheets are known to be palletized using a system comprising a feed device for feeding a substantially orderly succession of reams to an input station of a palletizing device, which feeds each ream to a palletizing station where the reams are stacked on a supporting pallet.

The palletizing device normally comprises a conveyor, in turn comprising two chains lying in parallel planes to define an endless path, and having a number of supporting members extending between the chains to define conveying surfaces. The conveying surfaces are equally spaced along the path with a spacing approximately equal to but no less than the length of the reams measured parallel to the path, and are fed continuously through the input station in time with respective reams.

At the palletizing station, each ream engages a stop member across the path, and is gradually released from the relative conveying surface and deposited onto the underlying reams or, in the case of the first ream, onto the underlying pallet.

Known palletizing devices of the above type are therefore relatively bulky and expensive.

Moreover, on account of the reams being arrested against the stop member, the palletizing device is either inaccurate, by being unable to establish a precise position of the reams at the palletizing station, or is accurate but relatively slow.

It is an object of the present invention to provide a unit for handling a product comprising at least one ream of sheets, designed to eliminate the aforementioned drawbacks.

According to the present invention, there is provided a unit for handling at least one product comprising at least one ream of sheets, the unit being characterized by comprising at least two gripping members; and actuating means for moving the gripping members to and from a gripping position wherein the gripping members engage the product on opposite sides of the product in a given first direction.

A non-limiting embodiment of the present invention will be described by way of example with reference to the accompanying drawings, in which:
Figures 1 and 2 show two schematic views in perspective of a preferred embodiment of the unit according to the present invention in two different operating positions;
Figure 3 shows a schematic view in perspective of a detail in Figures 1 and 2;
Figures 4 and 5 show two schematic views in perspective of a further embodiment of the unit according to the present invention in a first operating position;
Figure 6 shows a front view of the Figure 4 and 5 unit;
Figure 7 shows a schematic view in perspective of the Figure 4 and 5 unit in a second operating position;
Figure 8 shows a schematic plan view of an operating mode of the Figure 4 and 5 unit.

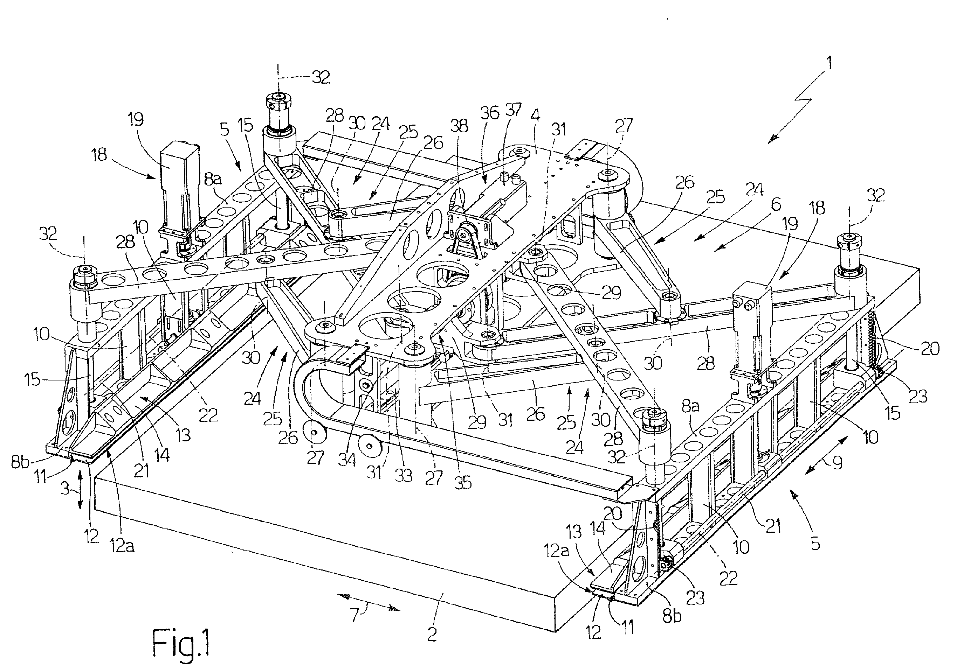

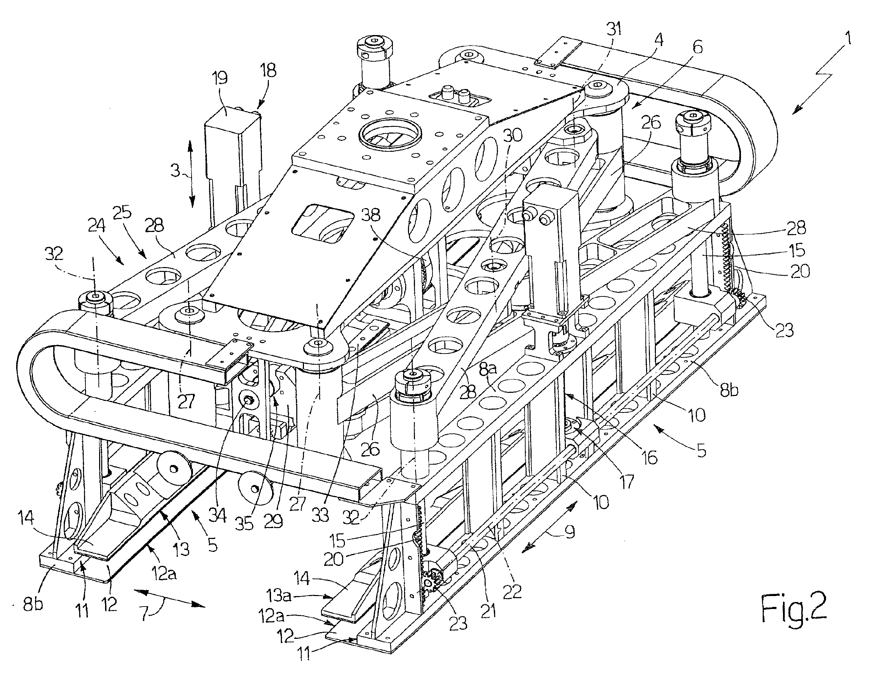

With reference to Figures 1 and 2, number 1 indicates as a whole a unit for handling a product 2 defined, in the example shown, by a ream 2a of sheets (not shown) comprising a number of sheets (not shown) superimposed in a substantially vertical direction 2 and normally wrapped in a sheet of wrapping material (not shown).

Obviously, in alternative embodiments not shown, product 2 is defined by a stack of reams 2a superimposed in direction 3.

Unit 1 comprises a supporting frame 4 connectable to a robot assembly (not shown) for moving unit 1 in space; and two gripping members 5 movable, with respect to frame 4 and by an actuating assembly 6, to and from a gripping position wherein members 5 engage ream 2a on opposite sides of ream 2a in a substantially horizontal direction 7 crosswise to direction 3.

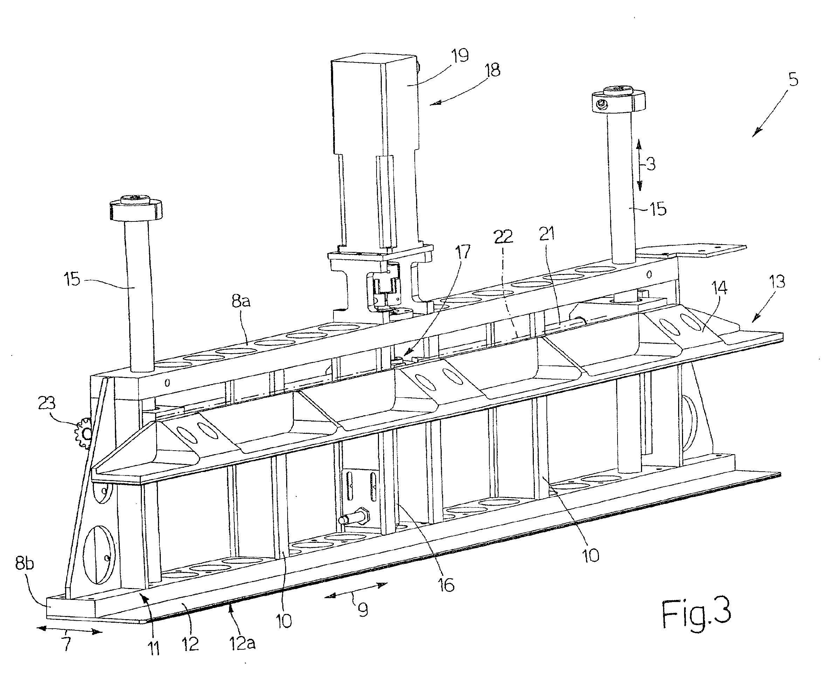

With reference to Figure 3, each member 5 comprises two metal sections 8, which extend parallel to each other and to a direction 9 perpendicular to directions 3 and 7, are connected to each other by a number of uprights 10 parallel to one another and to direction 3, and are located one (hereinafter indicated 8a) over the other (hereinafter indicated 8b). Section 8b is defined laterally by a flat surface 11 positioned facing ream 2a, and has a flat plate 12 projecting from surface 11 towards ream 2a to define a fixed bottom jaw 12a of member 5.

Member 5 also comprises a top jaw 13 defined by a section 14, which is fitted in sliding manner to two cylindrical guides 15 extending parallel to direction 3 and fitted between sections 8a and 8b, and is also fitted to a screw 16 by a screw-nut screw coupling 17 of a relative actuating device 18, a motor 19 of which rotates screw 16 to move section 14 linearly along guides 15 in direction 3.

Device 18 forms part of actuating assembly 6, and also comprises two racks 20 fitted to respective uprights 10 and parallel to direction 3; a shaft 21 fitted in rotary manner to section 14 to rotate, with respect to section 14, about an axis 22 substantially parallel to direction 9; and two sprockets 23 fitted to the free ends of shaft 21 to mesh with racks 20 as section 14 moves along guides 15.

Actuating assembly 6 also comprises, for each gripping member 5, two actuating devices 24, each of which in turn comprises a crank mechanism 25 having a crank 26 hinged to frame 4 to oscillate, with respect to frame 4, about a hinge axis 27 substantially parallel to direction 3, and a connecting rod 28, an intermediate point of which is hinged to a free end of crank 26, a first free end of which is connected in rotary manner to one of guides 15, and a second free end of which is hinged to a slide 29 shared with one of crank mechanisms 25 of the other gripping member 5. Connecting rod 28 therefore oscillates, with respect to crank 26, to slide 29, and to relative guide 15, about respective hinge axes 30, 31, 32 substantially parallel to one another and to axis 27.

Slide 29 is fitted in sliding manner to a guide 33 fitted to frame 4 and parallel to direction 9, and is also connected to a screw 34 - to which the other slide 29 is also connected - by a screw-nut screw coupling 35 of a relative actuating device 36, a motor 37 of which rotates screw 34 by means of a belt drive 38 to move slide 29 linearly along guide 33 in direction 9 and in time with the linear movement of the other slide 29.

In connection with the above, it should be pointed out that:
each axis 30 is located the same distance from each of relative axes 27, 31, 32, so that surface 11 of relative member 5 is perpendicular at all times to direction 7 as relative member 5 moves in direction 7;
axes 27 and 31 of each crank mechanism 25 are aligned with each other and with axes 27 and 31 of the other crank mechanism in direction 9; and
each axis 27 is aligned with relative axis 32 in direction 7 as relative member 5 moves in direction 7.

In a variation not shown, slides 29 may be moved along guide 33 by cranks 26, which are powered in time with each other.

Operation of unit 1 will now be described, as of the instant in which:
gripping members 5 have been moved with respect to each other in direction 7, so that the distance between surfaces 11 is greater than the width of ream 2a measured parallel to direction 7;
jaws 12a, 13 have been moved with respect to each other in direction 3, so that the distance between jaws 12a, 13 is greater than the thickness of ream 2a measured parallel to direction 3; and
unit 1 has been moved by said robot assembly (not shown), so that members 5 are positioned on opposite sides of ream 2a in direction 7.

At this point, members 5 are moved in direction 7, so that surfaces 11 engage ream 2a; and jaws 12a and 13 are moved in direction 3 to grip ream 2a, which may then be transferred accurately, for example, to a palletizing station (not shown) where reams 2a are stacked in direction 3 on a supporting pallet (not shown).

In connection with the above, it should be pointed out that, when the ratio between the dimensions of ream 2a measured parallel to directions 7 and 9 is relatively high, members 5 can be parted in direction 7 to enable unit 1 to transfer ream 2a in a perfectly horizontal position.

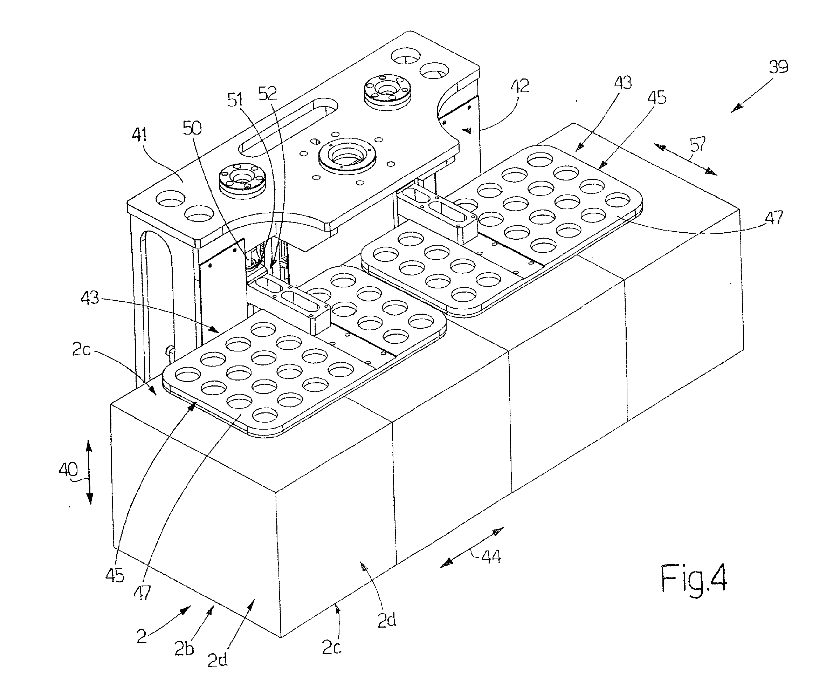

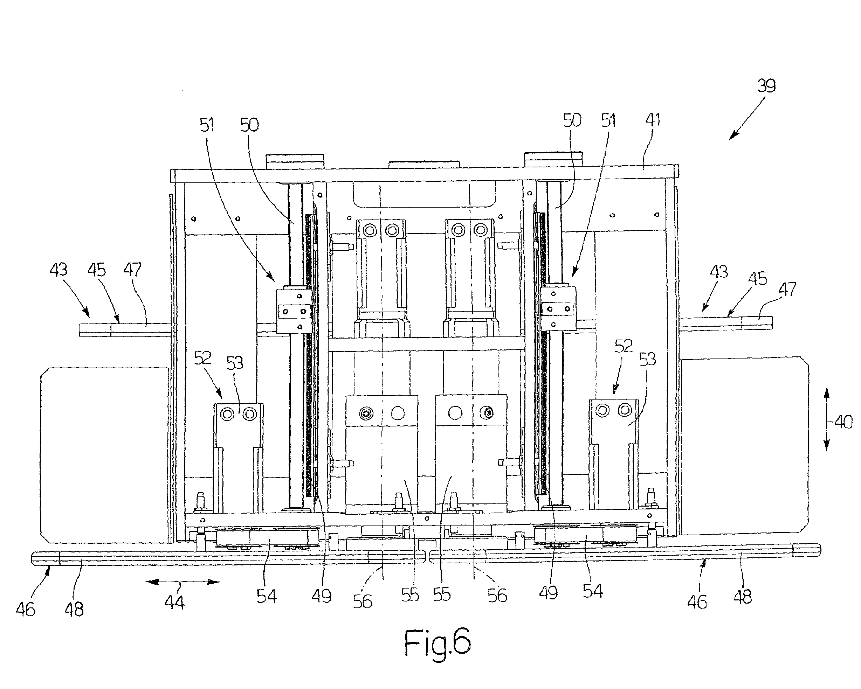

Figures 4 to 8 show a unit 39 for handling a number of (in the example shown, four) products 2, each defined by a substantially parallelepiped-shaped cardboard box 2b, which contains a stack of reams 2a (not shown in Figures 4 to 8) stacked in a substantially vertical direction 40, and is defined by two parallel, respectively top and bottom, faces 2c perpendicular to direction 40, and by four lateral faces 2d perpendicular to faces 2c.

Obviously, in alternative embodiments not shown, each product 2 is defined by one ream 2a or by a stack of reams 2a stacked in direction 40.

Unit 39 comprises a supporting frame 41 defined at the front by a substantially flat vertical surface 42, and connectable to a robot assembly (not shown) for moving unit 39 in space; and, in the example shown, two gripping devices 43, which are fitted to frame 41 side by side in a horizontal direction 44 parallel to surface 42, and are designed to each handle two products 2.

Each device 43 is a gripping device comprising two jaws 45, 46, of which jaw 45 is a top jaw defined by a flat plate 47 substantially perpendicular to surface 42, and jaw 46 is a bottom jaw defined by a flat plate 48 substantially parallel to plate 47.

Plate 47 is equipped on the underside surface with a number of suction cups (not shown) distributed over plate 47, is fitted in sliding manner to a guide 49 fitted to frame 41 and parallel to direction 40, and is also connected to a screw 50 by a screw-nut screw coupling 51 of a relative actuating device 52, a motor 53 of which rotates screw 50 by means of a belt drive 54 to move plate 47 linearly along guide 49 in direction 40.

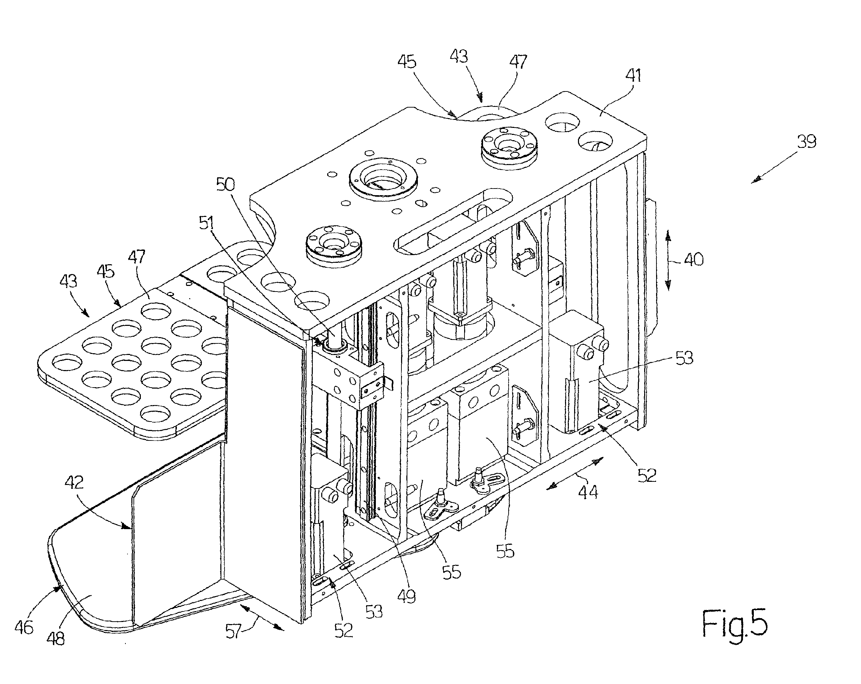

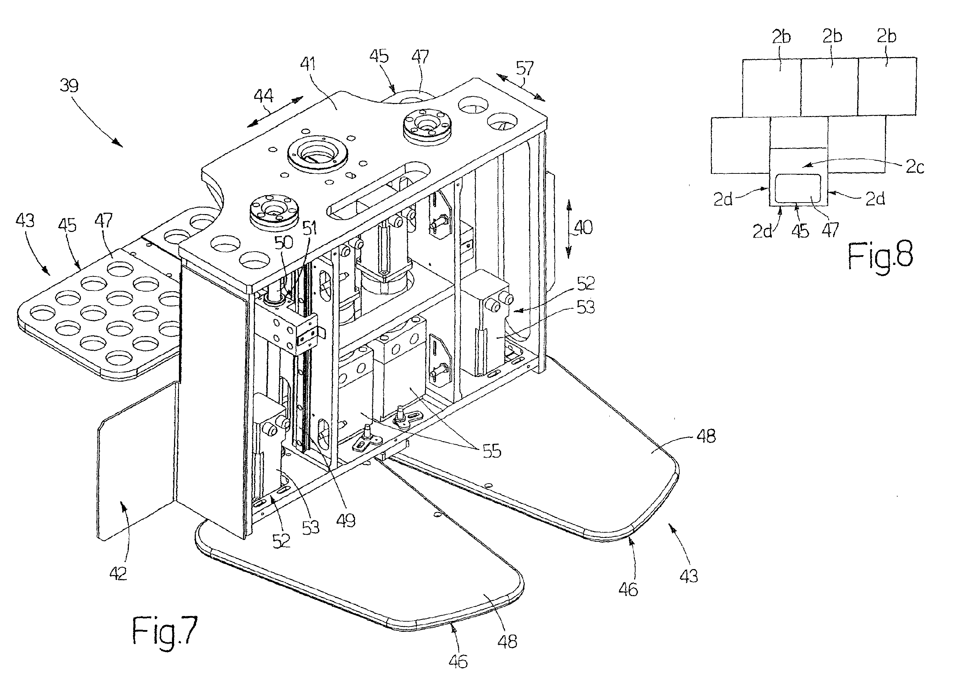

Plate 48 is fitted to the free end of an output shaft (not shown) of a motor 55 to oscillate, with respect to frame 41 and about a hinge axis 56 parallel to direction 40, between a loading position (Figures 4 and 5) wherein plate 48 is located substantially beneath plate 47, and an unloading position (Figure 7) wherein plates 47 and 48 are located on opposite sides of surface 42 in a direction 57 perpendicular to directions 40 and 44.

In a variation not shown, each plate 48 is fitted in sliding manner to frame 41 to move, with respect to frame 41, between the loading and unloading positions in direction 57.

Operation of unit 39 will now be described with reference to one device 43 and one box 2b, and as of the instant in which jaw 46 is set to the loading position, and jaw 45 is positioned along guide 49 so that the distance between jaws 45 and 46 is greater than the height of box 2b measured parallel to direction 40.

Box 2b is loaded onto unit 39 by feeding box 2b in direction 57 into contact with surface 42 (e.g. by means of a pusher not shown); then moving jaw 45 along guide 49 into a gripping position in which jaws 45, 46 grip box 2b; and finally activating the suction cups (not shown) to retain box 2b firmly.

Box 2b is unloaded by moving jaw 46 into the unloading position, and then deactivating the suction cups (not shown).

With reference to Figure 8, unit 39 has been found to be particularly advantageous in pallet loading operations, wherein boxes 2b are loaded onto a supporting pallet (not shown) for supporting a number of superimposed layers of boxes 2b, and wherein each layer comprises a number of boxes 2b.

Unit 39, in fact, which is designed to leave at least three of the four lateral faces 2d of box 2b free, provides for accurately positioning box 2b in the relative layer, even in the event the box 2b being handled is to be positioned contacting two or three boxes 2b already in the relative layer.

## Claims

1. A unit for handling at least one product (2) comprising at least one ream (2a) of sheets, the unit being **characterized by** comprising at least two gripping members (5; 45, 46); and actuating means (6; 52) for moving the gripping members (5; 45, 46) to and from a gripping position wherein the gripping members (5; 45, 46) engage the product (2) on opposite sides of the product (2) in a given first direction (7; 40).

2. A unit as claimed in Claim 1, wherein each gripping member (5) comprised two substantially parallel jaws (12a, 13); said actuating means (6) comprising first actuating means (18) for moving the jaws (12a, 13) to and from a gripping position wherein the jaws (12a, 13) engage the product (2) on opposite sides of the product (2) in a second direction (3) substantially crosswise to said first direction (7).

3. A unit as claimed in Claim 2, wherein said ream (2a) comprises a number of sheets superimposed in said second direction (3).

4. A unit as claimed in any one of the foregoing Claims, wherein each gripping member (5) comprises stop means (8b) defining a substantially flat surface (11) for engaging, in use, said product (2); said actuating means (6) comprising second actuating means (24) designed to move the gripping members (5) in said first direction (7) so that said surface (11) is perpendicular at all times to the first direction (7) as the gripping members (5) move in the first direction (7).

5. A unit as claimed in any one of the foregoing Claims, wherein said actuating means (6) comprise, for each said gripping member (5), two actuating devices (24), each of which in turn comprises a guide (33), a slide (29) mounted to slide along said guide (33), and a crank mechanism (25); said gripping member (5) being connected to said crank mechanisms (25) to move linearly in said first direction (7) as said slides (29) move along the relative said guides (33).

6. A unit as claimed in Claim 5, wherein the actuating devices (24) of each gripping member (5) are interconnected and timed with each other and with the actuating devices (24) of the other gripping member (5) so as to move the gripping members (5) simultaneously with respect to each other in said first direction (7).

7. A unit as claimed in Claim 5 or 6, wherein each said crank mechanism (25) comprises a crank (26) oscillating about a first axis (27), and a connecting rod (28) oscillating about a second, a third, and a fourth axis (30, 31, 32) all substantially parallel to said first axis (27); said second, said third, and said fourth axis (30, 31, 32) being hinge axes by which the connecting rod (28) oscillates with respect to the crank (26), the slide (29), and the relative gripping member (5) respectively.

8. A unit as claimed in Claim 7, wherein the crank (26) and the connecting rod (28) are designed so that the relative said first and said fourth axis (27, 32) remain aligned with each other in said first direction (7) as the relative gripping member (5) moves in the first direction (7).

9. A unit as claimed in Claim 7 or 8, wherein said second axis (30) is substantially equidistant from each of said first, said third, and said fourth axis (27, 31, 32).

10. A unit as claimed in any one of Claims 7 to 9, wherein said first and said third axis (27, 31) of each crank mechanism (25) are aligned with each other in a third direction (9) substantially crosswise to said first direction (7), and are aligned with the first and the third axis (27, 31) of the other crank mechanism (25) in the third direction (9).

11. A unit as claimed in Claim 1, wherein the product (2) is substantially parallelepiped-shaped and defined by four faces (2d) parallel to said first direction (40); said gripping members (45, 46) being designed to leave at least three of said four faces (2d) free in said gripping position.

12. A unit as claimed in Claim 1 or 11, wherein said actuating means (52) comprise third actuating means (52) for moving said gripping members (45, 46) with respect to each other in said first direction (40).

13. A unit as claimed in any one of Claims 1, 11 or 12, wherein said actuating means (52) comprise fourth actuating means (55) for moving a first (46) of said gripping members (45, 46), about a fifth axis (56) of rotation substantially parallel to said first direction (40), to and from a loading position wherein said first gripping member (46) substantially faces a second (45) of said gripping members (45, 46).

14. A unit as claimed in any one of Claims 1, 11 or 12, wherein a first (46) of said gripping members (45, 46) is movable, in a fourth direction (57) substantially crosswise to said first direction (40), to and from a loading position wherein said first gripping member (46) substantially faces a second (45) of said gripping members (45, 46).

15. A unit as claimed in Claim 13 or 14, wherein said first gripping member (46), when in the loading position, is located beneath said second gripping member (45).

16. A unit as claimed in any one of Claims 1 and 11 to 15, wherein at least one of the gripping members (45, 46) has suction means for engaging said product (2).

17. A unit as claimed in any one of Claims 1 and 11 to 16, wherein said ream (2a) comprises a number of sheets superimposed in said first direction (40).
